# EUROPEAN PATENT SPECIFICATION

(11) **EP 0 571 003 B1**
(45) Date of publication and mention of the grant of the patent: **16.07.1997**
(21) Application number: 93113828.3
(22) Date of filing: 12.11.1988
(51) Int. Cl.: F02M 47/02, F02M 59/46, F16K 31/06

(54) **Electromagnetically operated device for the rapid switch-over of electro-hydraulically actuated fuel injectors**
Elektromagnetisch betätigbare Vorrichtung zum schnellen Umschalten eines elektro-hydraulisch betätigten Kraftstoffeinspritzventils
Dispositif à commande électromagnétique pour la commutation rapide d'injecteurs de combustible à commande électrohydraulique

(30) Priority: 02.12.1987 CH 4702/87
(43) Date of publication of application: 24.11.1993
(62) Divisional of application: 88118883.3
(73) Proprietor: GANSER-HYDROMAG AG, 8001 Zürich (CH)
(72) Inventor: Ganser, Marco Alfredo, CH-8001 Zürich (CH)
(74) Representative: Patentanwälte Schaad, Balass, Menzl & Partner AG

(56) References cited:
- EP-A- 0 196 265
- DE-C- 759 099
- PATENT ABSTRACTS OF JAPAN vol. 9, no. 98 (M-375)(1821) 27 April 1985 & JP-A-59 221 456 (NIPPON DENSO) 13 December 1984

## Description

The present invention relates to a device for the intermittent electromagnetical operation of pilot valve member of electrohydraulically actuated fuel injectors as defined in the pre-characterising clause of claim 1.

In the fuel injectors disclosed in EP-A-0 228 578 the opening and closing movements of the injector needle valve member are controlled by the fuel pressure acting on both sides of an injector needle valve piston. The end surface of the needle valve piston opposite to the tip and seat of the injector needle valve is biased by the fuel pressure in a control chamber. To control the fuel pressure level in the control chamber and thus the opening and closing movements of the injector needle valve member an electromagnetically operated on-off pilot valve is provided which opens and closes an outlet orifice from the control chamber. Upon energization of a solenoid, the pilot valve retracts from its seat at the outlet orifice, opens the latter and the pressure in the control chamber drops in order to allow for the opening movement of the injector needle valve member and the begin of the injection event. Reseating of the pilot valve after the end of the electric pulse applied to the solenoid results in a pressure rise in the control chamber. Upon this pressure rise the injector needle valve member will be closed and the injection event will be terminated.

In order to improve the controllability of the injection events, mainly when the injection event is shorter in time than that of a full load injection, it is very important that the switch-over movement of the pilot valve takes place as quickly as possible after the end of the electric pulse. Since the injection will continue as long as the pilot valve remains open, a long time delay between the end of the electric command pulse to the solenoid and the switch-over movement of the pilot valve brings about that the injection duration is not controllable beyond a certain minimum injection duration. This fact is a great limitation of the mentioned prior art injectors.

EP-A-0 196 265 discloses a device for the intermittent electromagnetical operation of the pilot valve member of a fuel injector of the type defined in the pre-characterising clause of claim 1 which is designed to eliminate the drawbacks mentioned above. In order to precisely limit the maximum displacement distance of the armature member, a plurality of angularly spaced non-magnetic studs are provided to form a stop for the armature member to prevent the locking of the armature member at the retracted position. The studs are attached to the coil retainer. However, the latter is not rigid enough to ensure the solid and exact fixation of the studs.

This means that it is extremely difficult to precisely and permanently set the gap between the surface of the armature member which faces the pole face and said pole face. In case this gap is not set properly, the duration of the injection event cannot be controlled precisely enough.

It is now the main object of the present invention to propose a device of the afore-mentioned type which greatly and effectively reduces the time delay between the end of the electric command pulse and the switch-over movement of the pilot valve compared to the afore-mentioned prior art solution.

According to the present invention, this object is implemented by the features of claim 1.

The hydraulic pressure from the discharge orifice always acts in the opening direction of the pilot valve member. The closing bias of the pilot valve member is provided only by spring means, acting in the direction opposite to the pulling force of the solenoid and the hydraulic opening force resulting from the pressure in the orifice. Therefore the provision of means for the rapid switch-over of the pilot valve member after the termination of the electric pulses is particularly important.

In FR-A-2 543 647 an electromagnetical actuating device is disclosed for lifting-off a pilot valve member from a discharge opening to allow pressurised fuel to flow into a low-pressure return path in order to initiate an injection event. The pilot valve member is connected to the armature member of a solenoid. In order to allow for a space between the armature member and the pole face of the solenoid body when the pilot valve member is fully retracted from its seat, the movement of the armature member upon energisation of the solenoid coil is limited by a stop arrangement resulting from a particular design of the pilot valve member and a needle valve member slideably arranged within the pilot valve member.

This known solenoid-operated device is of a complicated design and is expensive to manufacture, in particular if the injector is intended to operate under high fuel pressures.

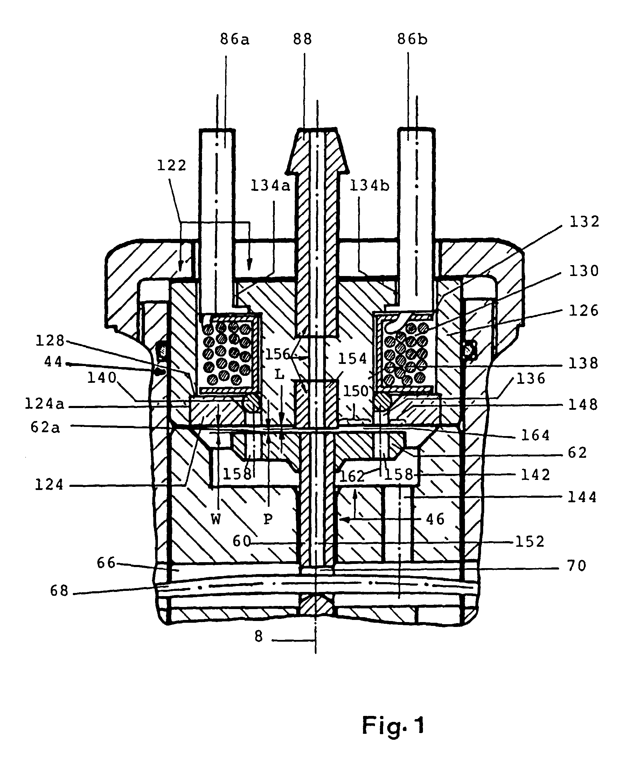

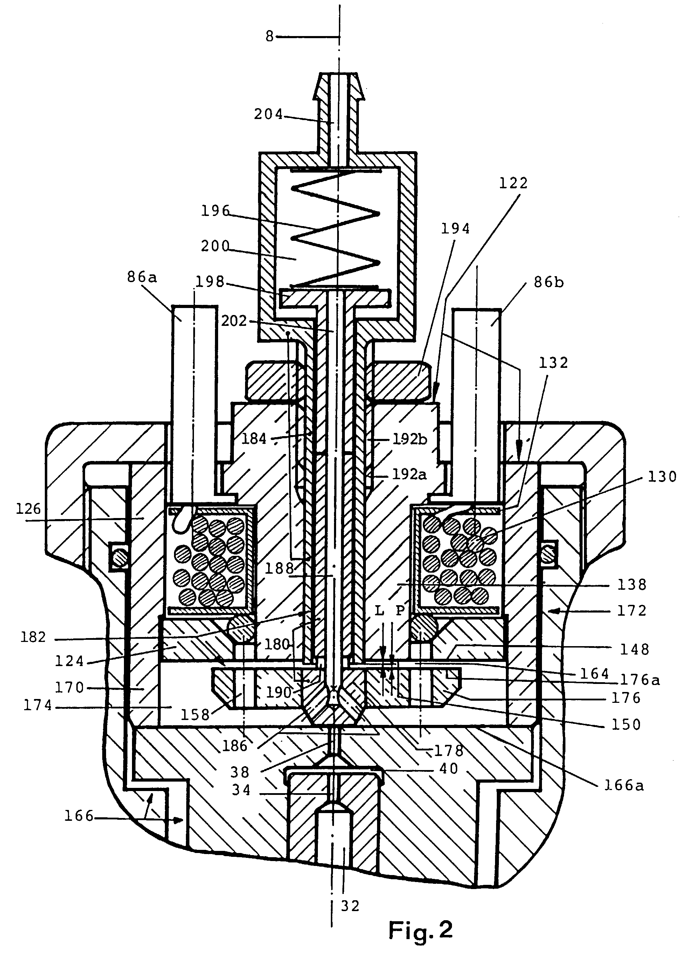

An advantageous embodiment of the invention is disclosed in Figure 2 and will now be described also in conjunction with Figure 1.
- Fig. 1: shows an enlarged fragmentary axial sectional view of the electromagnetically operated pilot valve for an electro-hydraulically actuated injector, and
- Fig. 2: shows an enlarged fragmentary axial sectional view of a second embodiment of an electromagnetically operated pilot valve for an electro-hydraulically actuated injector according to the present invention.

Figure 1 discloses the design of only the solenoid 44, of the pilot valve plate 62 and of the upper part of the stem 60 of the pilot valve 46 of an injector with electro-hydraulically actuated injector needle valve. The pilot valve 46 serves to close and to temporarily open the outlet side of an orifice (not shwon). Reference is made to Figure 1 and also to Figures 2 and 3 of EP-A-0 318 743 regarding the design and the mode of operation of the entire injector.

The solenoid 44 consists of a round body 122 and of a stator plate 124. The stator plate 124 is fitted in a bore 124a in an outer section 126 of the body 122 which is radially and axially determining the position of the stator plate 124 by means of its bore 124a and of a shoulder 128. A coil 130 is wound on a coil body 132 of plastic and is placed in the ring-shaped space delimited by the inside of the body 122 and by the inside surface of the stator plate 124. The two electrical connections 86a and 86b of the coil 130 protrude out of two bores 134a and 134b on the back side of the body 122. An inner round section 138 of the solenoid body 122 protrudes through a central bore 136 of the stator plate 124. An O-ring 140 seals the ring-shaped space housing the coil 130 from fuel present in a region 142 connected with a low pressure region (not shown) of the injector.

The side of the stator plate 124 facing the region 142 and the pilot valve plate 62 is in its essence flat and lies in the same plane as the front surface of the inner round section 138 of the solenoid body 122. Two pole faces 150 and 148 are defined between the surface of the inner round section 138 and the inner portion of the pilot valve plate 62 (first pole face 150) as well as between the outer portion of the pilot valve plate 62 and the inner portion of the stator plate 124 (second pole face 148). The two pole faces 148 and 150 are ringshaped and have a substantially equal surface area.

Figure 1 also illustrates the layout of the fuel return path for the fuel discharged during each intermittent injection event into the region 142 (see also Figs. 1 and 2 of EP-A-0 318 743). This return fuel is spilled back to the fuel tank by means of a fuel return line (not illustrated).

The discharged fuel flows from the region 142 by means of a passage 144 of big cross sectional area into a side bore 66, where a pilot valve spring 68 is placed. This pilot valve spring 68, which is designed as a bendable spring bar, serves to force the pilot valve 46 against the outlet side of the afore-mentioned orifice (not shown). From the side bore 66 the fuel can flow through a bore 70, which is machined in the stem 60 of the pilot valve 46, in a further bore 152. The bore 152 is machined in the stem 60 with its longitudinal axis coinciding with the injector's longitudinal axis 8. A stop member 154 is located in the inner round section 138 of the solenoid body 122 and is firmly connected to it, for example by bonding the stop member 154 into the inner round section 138. Both the stop member 154 and the stem 60 of the pilot valve 46 are made of hard material, for example of hardened steel. The stop member 154 protrudes beyond the pole face 150 by the amount L. A bore 156 with its longitudinal axis corresponding to the injector's longitudinal axis 8 is machined in the stop member 154, in the inner round section 138 and in a fuel return piece 88. The fuel return piece 88 is connected to the solenoid body 122 in a firm, seal-tight manner. Furthermore, the pilot valve plate 62 is provided with a number of bores 158, the graduated circle 162 of which is arranged in the middle of the ring-shaped slot 136 between the inner border of the stator plate 124 and the circumference of the inner round section 138. The diameter of the bores 158 is preferably about as large as the width of the ring-shaped slot 136. The bores 158 are equally spaced on the graduated circle 162, for example there can be four bores 158 spaced apart by 90°.

The pilot valve 46 including the pilot valve plate 62 are surrounded by fuel, since the region 142 and the different bores and passages as well as a disc-shaped space 164 between the pole faces 148 and 150 of the solenoid 44 and the side 62a of the pilot valve plate 62 facing said pole faces are filled with fuel.

To correctly fulfill its function, the pilot valve 46 must be capable to move very fast. Additionally thereto, every stroke must be an exact reproduction of the foregoing one, provided that the same electric pulse is fed to the solenoid 44. We distinguish between a pull-in stroke during which the pilot valve 46 is lifted off its seat at the outlet of an orifice 38 (see Fig. 2) and moves towards the stop member 154, and a return stroke in the opposite direction immediately after the end of an electric pulse. For either the pull-in or the return stroke the amount of travel of the pilot valve 46 corresponds to P.

During a fast movement of a plate in a liquid, a hydraulic pressure acting in the direction opposite to the movement of the plate arises. In the present situation and without the preventive measures as described, this hydraulic pressure would slow down the motion of the pilot valve 46 by a factor of 2.

The arrangement of the bores 158 is very effective in substantilly reducing the hydraulic fuel pressure acting on the pilot valve plate 62 during its motion.

Contrary to the pull-in movement which is stable and repeatable, the return movement of the pilot valve 46 can show undesired instabilities if no appropriate measures are taken. To such measures belongs the stop member 154.

The maximum gap W between both pole faces 148 and 150 and the surface 62a of the pilot valve plate 62 facing the pole faces 148 and 150 is bigger than the maximum amount of travel P of the pilot valve 46. When the pilot valve 46 is attracted by the solenoid 44 and strikes the stop member 154, a gap L is maintained between the pole faces 148 and 150 and the pilot valve plate 62. This gap L reduces in a known manner the remanence of the electromagnetic material when the current to the solenoid 44 is switched off and thus drastically reduces the electromagnetic adhering action which would retain the pilot valve 46 adhered for a too long time after the current switch-off. If the pilot valve plate 62 is surrounded by a liquid, as it is the case, then a hydraulic adhering action is additionally hindering the return motion of the pilot valve plate 62 if the latter comes too close to the pole faces 148 and 150. The intensity of the hydraulic adhering action varies from one return stroke to the next one in an uncontrollable way. This is the main reason for disturbances in the release time of the pilot valve 46, if no effective precautionary steps are taken. To counteract this, the remaining gap L and the bores 158 are effective. The disc-shaped space 164, the volume of which is increasing during the return movement of the pilot valve 46, can be easily refilled with fuel through the bores 158.

As explained above, to build a remaining gap in an electromagnetic loop to reduce the release time of the solenoid valve is a well known method and is part of the known state of the art. In the solution as described, where a cylindrical stop member 154 is placed coaxially to the stem 60 of the pilot valve 46, the impacts resulting from the pilot valve 46 striking the member 154 are taken over by two hard pieces: the stem 60 and the stop member 154. The wear of the parts is greatly reduced due to this fact and therefore an extended life of the components is achieved. Additionally, the stop member 154 can be made of hardened steel which despite being an electromagnetic material does not disturb the desired dynamic behaviour of the pilot valve 46, since the contacting surface between the pilot valve stem 60 and the stop member 154 is very small compared to the pole faces 148 or 150.

Figure 2 illustrates an alternative design of the solenoid 172 as well as of the pilot valve 182 and the stop member 184 according to the present invention. The pilot valve 182 also serves to close and to temporarily open the outlet side of an orifice 38 which opens into a small chamber 40. A bore 34 connects the chamber 40 with a further bore 32. Reference is made to EP-A-0 318 743 regarding the design and the mode of operation of the entire injector. The stator plate 124 is arranged inside an elongated section 170 of the outer section 126. In a space 174 between the upper end surface 166a of a cylindrical piece 166 and the stator plate 124 as well as the pole face surface 150 of the inner round section 138 of the solenoid 172, a pilot valve plate 176 having an upper surface 176a and the lower enlarged section 178 of a stem 180 of the pilot valve 182 are placed. The stem 180 extends into the inner bore of the elongated stop member 184 and is radially guided therein. Two bores 186 are machined in the lower enlarged section 178 of the stem 180 and connect the space 174 with a bore 188 machined in the inside of the stem 180. An additional side-bore 190 connects the disc-shaped space 164 with the bore 188. This layout of the bores 186, 188 and 190 brings about a substantial reduction of the hydraulic pressure acting on the pilot valve plate 176 during the movement of the pilot valve 182.

To adjust the maximum amount of travel P of the pilot valve 182 - an operation necessary to compensate for tolerance differences of the two orifices 34 and 38 from one injector to another - the elongated stop member 184 can be axially positioned in the solenoid 172. For this purpose, an inner thread 192a is machined in the solenoid 172, i.e. in the round section 138, and a corresponding outer thread 192b is machined in the upper part of the elongated stop member 184. By rotating the elongated stop member 184 and screwing it more or less in the thread 192a one can adjust the length L of the end of the elongated stop member 184 protruding beyond the surface of the pole face 150 and therefore adjust the pilot valve lift P. Once the desired pilot valve lift P has been set, one can block the elongated stop member 184 by means of the countering nut 194.

A pilot valve spring 196 is transmitting its bias force to an intermediate piece 198 which is radially guided in the same bore of the elongated stop member 184 as the stem 180 of the pilot valve 182. The intermediate piece 198 transmits the elastic bias force of the pilot valve spring 196 to the stem 180 for forcing the latter to close the outlet side of orifice 38. The spring 196 is placed in a chamber 200 at the upper end of the elongated stop member 184. The fuel return path extends through the bore 188 in the stem 180 and a bore 202 in the intermediate piece 198 and exits the chamber 200 through a bore 204.

The mode of operation of the embodiment according to Figure 2 is analogous to the mode of the embodiment previously described in connection with Figure 1.

## Claims

1. Device for the intermittent electromagnetical operation of the pilot valve member (182) of electrohydraulically actuated fuel injectors for closing and temporarily opening the outlet side of an orifice (38) depending upon applied electric pulses of a predetermined duration, comprising a solenoid (172) with a solenoid body (122) defining a pole face (148, 150), a solenoid coil (130) which is placed within said solenoid body (122), an armature member (176) connected to a stem (180) of said pilot valve member (182), resetting spring means (196) for biasing said pilot valve member (182) against the outlet side of said orifice (38), a stop member (184) for stopping the opening movement of said pilot valve member (182) provided in said solenoid body (122) and placed coaxially to said stem (180) and protruding by a given amount (L) beyond said pole face (148, 150) for defining a gap (L) between the surface (176a) of said armature member (176) facing said pole face (148, 150) and said pole face (148, 150) at the end of the opening movement of said pilot valve member (182), in order to minimize the release time of said armature member (176) after the end of an electric pulse, characterised in that said stop member (184) is of elongated, cylindrical shape and extends in the direction of the longitudinal axis (8) of said solenoid (172), the stem (180) of said pilot valve member (182) being radially guided within a bore axially arranged in said elongated stop member (184).

2. Device according to claim 1, characterised in that the stem (180) of said pilot valve member (182) contacts the protruding end of said stop member (184) at the end of the opening movement of said pilot valve member (46; 182).

3. Device according to claim 1, characterised by means for moving and positioning said stop member (184) in an inner section (138) of said solenoid body (122) to set a desired amount of travel (P) of said pilot valve member (182) by changing said given amount (L) of protrusion of said stop member (184).

4. Device according to claim 3, characterised in that said stop member (184) is radially guided within said inner section (138).

5. Device according to claim 4, characterised in that said stop member (184) is provided with an outer thread (192b) engaging a corresponding inner thread (192a) provided in said inner section (138) for axially moving and positioning said stop member (184) by threading said stop member (184) into or out of said inner section (138).

6. Device according to claim 1, characterised in that said resetting spring means comprise a pilot valve spring (196) acting upon the upper end of said stem (180) of said pilot valve member (182).

7. Device according to claim 7, characterised in that said pilot valve spring (196) is placed in a space (200) provided in the inside of said elongated stop member (184).

8. Device according to claim 1, characterised in that said armature member (176) is provided with at least two bores (158) connecting the side (176a) of said armature member (176) facing said pole face (148, 150) with the opposite side of said armature member (176).

9. Device according to claim 1, characterised by a passage (188, 202) at least partly arranged inside said solenoid body (122) and extending essentially along the longitudinal axis (8) of said solenoid body (122), said passage (188, 202) defining a fuel return path for the fuel discharged from said orifice (38) during every injection event.

## Patentansprüche

1. Vorrichtung für die intermittierende elektromagnetische Betätigung des Steuerventilelements (182) elektrohydraulisch betätigter Kraftstoffeinspritzventile zum Verschließen und zeitweiligen Öffnen der Auslaßseite einer Öffnung (38) in Abhängigkeit von angelegten elektrischen Impulsen bestimmter Zeitdauer, mit einem Solenoid (172) mit einem eine Polfläche (148, 150) definierenden Solenoidkörper (122), einer Solenoidwicklung (130), die im Solenoidkörper (122) angeordnet ist, einem mit einem Schaft (180) des Steuerventilelements (182) verbundenen Ankerelement (176), Rückstellfedermitteln (196) zum Belasten des Steuerventilelements (182) gegen die Auslaßseite der Öffnung (38), einem Anschlagelement (184) zum Anhalten der Öffnungsbewegung des Steuerventilelements (182), das in dem Solenoidkörper (122) vorgesehen und koaxial zu dem Schaft (180) angeordnet ist und zum Festlegen eines Zwischenraums (L) zwischen der der Polfläche (148, 150) zugekehrten Fläche (176a) des Ankerelements (176) und der Polfläche (148, 150) am Ende der Öffnungsbewegung des Steuerventilelements (182) um einen bestimmten Betrag (L) über die Polfläche (148, 150) vorsteht, um die Auslösezeit des Ankerelements (176) nach dem Ende eines elektrischen Impulses zu minimieren, dadurch gekennzeichnet, daß das Anschlagelement (184) von langgestreckter, zylindrischer Form ist und sich in Richtung der Längsachse (8) des Solenoids (172) erstreckt, wobei der Schaft (180) des Steuerventilelements (182) in einer axial in dem langgestreckten Anschlagelement (184) angeordneten Bohrung radial geführt wird.

2. Vorrichtung nach Anspruch 1, dadurch gekennzeichnet, daß der Schaft (180) des Steuerventilelements (182) das vorstehende Ende des Anschlagelements (184) am Ende der Öffnungsbewegung des Steuerventilelements (46; 182) berührt.

3. Vorrichtung nach Anspruch 1, gekennzeichnet durch Mittel zur Bewegung und Positionierung des Anschlagelements (184) in einem Innenabschnitt (138) des Solenoidkörpers (122) zum Einstellen eines gewünschten Bewegungsweges (P) des Steuerventilelements (182) durch Ändern des gegebenen Betrags (L) des Vorstehens des Anschlagelements (184).

4. Vorrichtung nach Anspruch 3, dadurch gekennzeichnet, daß das Anschlagelement (184) in dem Innenabschnitt (138) radial geführt wird.

5. Vorrichtung nach Anspruch 4, dadurch gekennzeichnet, daß das Anschlagelement (184) mit einem Außengewinde (192b), welches in ein in dem Innenabschnitt (138) vorgesehenes entsprechendes Innengewinde (192a) eingreift, zur axialen Bewegung und Positionierung des Anschlagelements (184) durch Schrauben des Anschlagelements (184) in und aus dem Innenabschnitt (138) versehen ist.

6. Vorrichtung nach Anspruch 1, dadurch gekennzeichnet, daß die Rückstellfedermittel eine Steuerventilfeder (196) aufweisen, die auf das obere Ende des Schafts (180) des Steuerventilelements (182) wirkt.

7. Vorrichtung nach Anspruch 7, dadurch gekennzeichnet, daß die Steuerventilfeder (196) in einem innerhalb des langgestreckten Anschlagelements (184) vorgesehenen Raum (200) angeordnet ist.

8. Vorrichtung nach Anspruch 1, dadurch gekennzeichnet, daß das Ankerelement (176) mit wenigstens zwei Bohrungen (158) versehen ist, welche die der Polfläche (148, 150) zugekehrte Seite (176a) des Ankerelements (176) mit der entgegengesetzten Seite des Ankerelements (176) verbinden.

9. Vorrichtung nach Anspruch 1, gekennzeichnet durch einen Durchgang (188, 202), der wenigstens teilweise innerhalb des Solenoidkörpers (122) angeordnet ist und sich im wesentlichen entlang der Längsachse (8) des Solenoidkörpers (122) erstreckt, wobei der Durchgang (188, 202) einen Kraftstoffrückführungsweg für den an der Öffnung (38) während jedes Einspritzvorganges abgegebenen Kraftstoff definiert.

## Revendications

1. Dispositif pour la manoeuvre électromagnétique intermittente de l'élément (182), formant robinet pilote, d'injecteurs de carburant à manoeuvre électro-hydraulique pour fermer et ouvrir temporairement le côté extérieur d'un orifice (38) en fonction d'impulsions électriques appliquées d'une durée prédéterminée, comportant un électro-aimant (172) comprenant un corps (122) de l'électro-aimant définissant une face polaire (148, 150), un bobinage (130) de l'électro-aimant placé à l'intérieur dudit corps (122) de l'électro-aimant, un élément formant armature (176) relié à une tige (180) dudit élément (182) formant robinet pilote, des moyens élastiques de rappel (196) pour contraindre ledit élément (182 formant robinet pilote contre le côté extérieur dudit orifice (38), un élément formant butée (184), pour arrêter le mouvement d'ouverture dudit élément formant robinet pilote (182), prévu dans ledit corps (122) de l'électro-aimant et placé coaxialement à ladite tige (180) et débordant d'une longueur donnée (L) au-delà de ladite face polaire (148, 150) pour définir un jeu (L) entre la surface (176a) dudit élément formant armature (176) qui fait face à ladite face polaire (48, 150) et ladite face polaire (148, 150) à la fin du mouvement d'ouverture dudit élément (182) formant robinet pilote, de façon à réduire au minimum le temps nécessaire pour relâcher ledit élément formant armature (176) après la fin de l'impulsion électrique, caractérisé par le fait que ledit élément formant butée (184) est de forme cylindrique allongée, et s'étend selon la direction de l'axe longitudinal (8) dudit électro-aimant (172), la tige (180) dudit élément (182) formant robinet pilote étant guidée radialement à l'intérieur d'un perçage disposé axialement dans le dit élément allongé (184) formant butée.

2. Dispositif selon la revendication 1, caractérisé par le fait que la tige (180) dudit élément (182) formant robinet pilote vient en contact avec l'extrémité débordante dudit élément formant butée (184) à la fin du mouvement d'ouverture dudit élément 46; 182) formant robinet pilote.

3. Dispositif selon la revendication 1, caractérisé par des moyens pour déplacer et positionner ledit élément formant butée (184) dans une portion intérieure (138) dudit corps (122) de l'électro-aimant pour ajuster une valeur désirée de la course (P) dudit élément (182) formant robinet pilote en changeant ladite valeur donnée (L) de débordement dudit élément formant butée (184).

4. Dispositif selon la revendication 3, caractérisé par le fait que ledit élément formant butée (184) est guidé radialement à l'intérieur de ladite portion intérieure (138).

5. Dispositif selon la revendication 4, caractérisé par le fait que ledit élément formant butée (184) est muni d'un filetage extérieur (192b) qui engrène dans un filetage intérieur correspondant (192a) prévu dans ladite portion intérieure (138) pour déplacer axialement et positionner ledit élément formant butée (184) en vissant ledit élément formant butée (184) pour le faire pénétrer dans ladite portion intérieure (138) ou l'en sortir.

6. Dispositif selon la revendication 1, caractérisé par le fait que lesdits moyens élastiques de rappel comportent un ressort (196) de robinet pilote agissant sur l'extrémité supérieure de ladite tige (180) dudit élément (182) formant robinet pilote.

7. Dispositif selon la revendication 7, caractérisé par le fait que ledit ressort (196) de robinet pilote est placé dans un espace (200) prévu à l'intérieur dudit élément allongé formant butée (184).

8. Dispositif selon la revendication 1, caractérisé par le fait que ledit élément formant armature (176) présente au moins deux perçages (158) reliant la face (176a) dudit élément formant armature (176) qui fait face à ladite face polaire (148, 150) avec la face opposée dudit élément formant armature (176).

9. Dispositif selon la revendication 1, caractérisé par un passage (188, 202) disposé, au moins partiellement, à l'intérieur dudit corps (122) de l'électro-aimant et s'étendant essentiellement le long de l'axe longitudinal (8) dudit corps (122) de l'électro-aimant, ledit passage (188, 202) définissant un chemin de retour du carburant pour le carburant évacué par ledit orifice (38) au cours de chaque injection.
